(19) Europäisches Patentamt
European Patent Office
Office européen des brevets

(11) **EP 4 697 327 A1**

(12) **EUROPEAN PATENT APPLICATION**
published in accordance with Art. 153(4) EPC

(43) Date of publication:
**18.02.2026 Bulletin 2026/08**

(21) Application number: **23932416.3**

(22) Date of filing: **11.04.2023**

(51) International Patent Classification (IPC):
*G10L 19/22* (2013.01)

(52) Cooperative Patent Classification (CPC):
**G10L 19/22; H04L 65/75**

(86) International application number:
**PCT/CN2023/087699**

(87) International publication number:
**WO 2024/212118 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.**
**Beijing 100085 (CN)**

(72) Inventor: **WANG, Bin**
**Beijing 100085 (CN)**

(74) Representative: **Gunzelmann, Rainer et al
Wuesthoff & Wuesthoff
Patentanwälte und Rechtsanwalt PartG mbB
Schweigerstraße 2
81541 München (DE)**

(54) **AUDIO CODE STREAM SIGNAL PROCESSING METHOD AND APPARATUS, ELECTRONIC DEVICE AND STORAGE MEDIUM**

(57)    An audio code stream signal processing method and apparatus, an electronic device, a storage medium, and a computer program product. The method comprises: acquiring a code stream signal (S1); acquiring decoding control parameters (S2); and, according to the decoding control parameters, processing the code stream signal to generate a target audio signal and/or an intermediate format signal, the intermediate format signal being obtained on the basis of the target audio signal (S3). Therefore, users can flexibly select an output signal format of a decoder by setting the decoding control parameters, and design audio service solutions on the basis of output signals, so as to obtain the optimal audio experience service.

```
┌─────────────────────────────────────────────────────────────────┐
│                   Obtain a code stream signal                     │── S1
└─────────────────────────────────────────────────────────────────┘
                                  │
                                  ▼
┌─────────────────────────────────────────────────────────────────┐
│              Obtain a decoding control parameter                  │── S2
└─────────────────────────────────────────────────────────────────┘
                                  │
                                  ▼
┌─────────────────────────────────────────────────────────────────┐
│ Generate a target audio signal and/or an intermediate format      │
│ signal by processing the code stream signal according to the      │── S3
│ decoding control parameter, in which the intermediate format      │
│ signal is obtained based on the target audio signal               │
└─────────────────────────────────────────────────────────────────┘
```

FIG. 1

## Description

## TECHNICAL FIELD

The disclosure relates to the field of communication technology, in particular to a method for processing an audio code stream signal, an apparatus for processing an audio code stream signal, an electronic device, and a storage medium.

## BACKGROUND

Voice and audio communication services have expanded from narrowband signals to ultra-wideband and even full-band services, but they are still mono services. The demand for high-quality audio continues to grow. Compared to mono audio, stereo audio has a sense of direction and distribution for each sound source, which can improve the clarity of sound. With the increase of transmission bandwidth, the upgrade of a signal acquisition equipment in a terminal, the improvement of performance of a signal processor, and the upgrade of a playback equipment in the terminal, there are three formats of audio signals that can provide three-dimensional (3D) audio services, namely, channel-based multi-channel audio signal, object-based audio signal, and scene-based audio signal.

## SUMMARY

The embodiments of the disclosure provide a method for processing an audio code stream signal, an apparatus for processing an audio code stream signal, an electronic device and a storage medium, to generate a target audio signal and/or an intermediate format signal obtained based on the target audio signal by processing a code stream signal according to a decoding control parameter. Furthermore, it allows determining a rendering signal based on the target audio signal and/or the intermediate format signal. Users can flexibly select a format of an output signal of a decoder by setting decoding control parameter, and design a solution for an audio service based on the output signal, so as to achieve an optimal audio experience service.

According to a first aspect of embodiments of the disclosure, a method for processing an audio code stream signal is provided. The method includes: obtaining a code stream signal; obtaining a decoding control parameter; and generating a target audio signal and/or an intermediate format signal by processing the code stream signal according to the decoding control parameter, in which the intermediate format signal is obtained based on the target audio signal.

In the technical solution, the code stream signal and the decoding control parameter are obtained, and the target audio signal and/or the intermediate format signal may be generated by processing the code stream signal according to the decoding control parameter, in which the intermediate format signal is obtained based on the target audio signal. Thus, the target audio signal and/or the intermediate format signal obtained based on the target audio signal can be obtained by processing the code stream signal according to the decoding control parameter. Moreover, a rendering signal may be determined based on the target audio signal and/or the intermediate format signal. Therefore, users can flexibly select a format of an output signal of a decoder by setting the decoding control parameter, and design a solution for an audio service based on the output signal, so as to obtain an optimal audio experience service.

According to a second aspect of embodiments of the disclosure, an apparatus for processing an audio code stream signal is provided. The apparatus includes: a signal obtaining module, configured to obtain a code stream signal; a parameter obtaining module, configured to obtain a decoding control parameter; and a signal processing module, configured to generate a target audio signal and/or an intermediate format signal by processing the code stream signal according to the decoding control parameter, in which the intermediate format signal is obtained based on the target audio signal.

According to a third aspect of embodiments of the disclosure, an electronic device is provided. The electronic device includes: at least one processor and a memory communicatively connected to the at least one processor. The memory stores instructions executable by the at least one processor, and the instructions are executed by the at least one processor to enable the at least one processor to implement the method described in the first aspect.

According to a fourth aspect of embodiments of the disclosure, a non-transitory computer-readable storage medium is provided. The medium stores computer instructions, which are used to cause a computer to implement the method described in the first aspect.

According to a fifth aspect of embodiments of the disclosure, a computer program product is provided. The product includes computer instructions, and when the computer instructions are executed by a processor, the method described in the first aspect is implemented.

It is understood that the foregoing general description and the following detailed description are exemplary and explanatory only and do not limit the disclosure.

## BRIEF DESCRIPTION OF THE DRAWINGS

In order to clearly illustrate technical solutions in the embodiments of the disclosure or background technologies, a description of drawings used in the embodiments of the disclosure or the background technologies is given below.

FIG. 1 is a flowchart of a method for processing an audio code stream signal provided by an embodiment of the disclosure.

FIG. 2 is a schematic diagram of a method for processing the audio code stream signal provided by an embodiment of the disclosure.

FIG. 3 is a schematic diagram of a method for processing the audio code stream signal provided by an embodiment of the disclosure.

FIG. 4 is a schematic diagram of a method for processing the audio code stream signal provided by an embodiment of the disclosure.

FIG. 5 is a schematic diagram of a method for processing the audio code stream signal provided by an embodiment of the disclosure.

FIG. 6 is a flowchart of a method for processing the audio code stream signal provided by an embodiment of the disclosure.

FIG. 7 is a flowchart of a method for processing the audio code stream signal provided by an embodiment of the disclosure.

FIG. 8 is a schematic diagram of an apparatus for processing an audio code stream signal provided by an embodiment of the disclosure.

FIG. 9 is a schematic diagram of an apparatus for processing an audio code stream signal provided by an embodiment of the disclosure.

FIG. 10 is a structural diagram of an electronic device provided by an embodiment of the disclosure.

## DETAILED DESCRIPTION

In order to enable those skilled in the art to better understand the technical solutions of the disclosure, the technical solutions in the embodiments of the disclosure will be clearly and fully described below with reference to the accompanying drawings.

Unless the context requires otherwise, throughout the specification and claims, the term "comprises" is to be interpreted in an open, inclusive sense, i.e., "comprises, but is not limited to". In the description of the specification, the term "some embodiment" and the like are intended to indicate that a particular feature, structure, material, or characteristic related to an embodiment or example is included in at least one embodiment or example of the disclosure. The schematic representation of the above term does not necessarily refer to the same embodiment or example. The particular feature, structure, material, or characteristic described above may be included in any one or more embodiments or examples in any appropriate manner.

It should be noted that the terms "first", "second", etc., in the specification, claims and drawings of the disclosure are used to distinguish similar objects, and are not necessarily used to describe a specific order or sequence. The terms "first" and "second" are used for descriptive purposes only and do not indicate or imply relative importance or implicitly indicate the number of indicated technical features. Therefore, a feature defined with the term "first" or "second" may explicitly or implicitly indicate that there are one or more features. It is understood that the terms so used are interchangeable under appropriate circumstances, so that the embodiments of the disclosure described herein may be executed in sequences other than those illustrated or described herein. The implementations described in the following example embodiments do not represent all implementations consistent with the disclosure. Instead, they are merely examples of apparatus and methods consistent with some aspects of the disclosure as recited in the attached claims.

The term "at least one" in the disclosure may also be described as one or more, and the term "multiple" may be two, three, four or more, which is not limited in the disclosure. In the embodiment of the disclosure, for a type of technical features, "first", "second" and "third", and "A", "B", "C" and "D" are used to distinguish different technical features of the type, the technical features described using the "first", "second" and "third", and "A", "B", "C" and "D" do not indicate any order of precedence or magnitude.

The correspondences shown in the tables in the disclosure may be configured or may be predefined. The values of information in the tables are merely examples and may be configured to other values, which are not limited in the disclosure. In configuring the correspondence between the information and the parameter, it is not necessarily required that all the correspondences illustrated in the tables must be configured. The correspondences illustrated in certain rows in the tables in the disclosure may not be configured, and the above tables may be adjusted appropriately, such as splitting, combining, or the like. The names of the parameters shown in the titles of the above tables may be configured as other names that are understandable by the communication device, and the values or representations of the parameters may be other values or representations that are understandable by the communication device. Each of the above tables may also be implemented with other data structures, such as, arrays, queues, containers, stacks, linear tables, pointers, chained lists, trees, graphs, structures, classes, heaps, and Hash tables.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and the design constraints of the technical solution. Those skilled in the art may use different methods to implement the described functions for each particular application, but such implementations should not be considered beyond the scope of the disclosure.

The 1st Generation (1G) mobile communication technology is the first generation of wireless cellular technology and belongs to an analog mobile communication network. The transition from 1G to 2nd Generation (2G) shifted mobile phones from analog communication to digital communication, adopting a global system for mobile communication (GSM) network standard. A voice encoder adopts adaptive multi-rate rate-narrow-band speech codec (AMR), enhanced full rate (EFR), full rate (FR), and half rate (HR) communication to provide single-channel narrowband voice service. The 3rd Generation (3G) mobile communication system was proposed by the International Telecommunication Union (ITU) for international mobile communication in 2000. It adopts time division-synchronization code division multiple access (TD-SCDMA), code division multiple access (CDMA) 2000, or wideband code division multiple access (WCDMA), and its voice encoder uses adaptive multi-rate wideband (AMR-WB) to provide single-channel broadband voice service. The 4th Generation (4G) represents a significant enhancement over 3G technology, employing a full IP approach for both data and voice, providing real-time high definition (HD)+Voice services for voice and audio. An enhanced voice services (EVS) codec used can achieve high-quality compression for both voice and audio.

The voice and audio communication services provided above have expanded from narrowband signals to ultra-wideband and even full-band services, but they are still mono services. The demand for high-quality audio continues to grow. Compared to mono audio, stereo audio has a sense of direction and distribution for each sound source, which can improve the clarity of sound.

With the increase of transmission bandwidth, the upgrade of a signal acquisition equipment in a terminal, the improvement of performance of a signal processor, and the upgrade of a playback equipment in the terminal, there are three signal formats that can provide 3D audio services, namely, channel-based multi-channel audio signal, object-based audio signal, and scene-based audio signal. The 3rd Generation Partnership Project (3GPP) SA4 standardization has proposed an immersive voice and audio services (IVAS) codec that supports encoding and decoding requirements of the above three signal formats. The three signal formats includes the following specific signal formats. The channel-based signals include: mono signals, stereo signals (Stereo), binaural signals (Binaural), 5.1 and 7.1 surround signals (Surround), 5.1.4 and 7.1.4 surround signals (Surround), where ".4" represents height channel signals (Height) . The scene-based signals include: first-order ambisonics (FOA), high-order ambisonics (HOA) 2, and HOA3. The object-based signals include audio data and metadata. In addition, the IVAS also supports a metadata-assisted spatial audio (MASA) signal. Terminals that support 3D audio services include mobile phones, computers, tablets, conference system equipments, augmented reality (AR)/virtual reality (VR) equipments, cars, etc.

In decoder applications, particularly for mono decoders outputting audio signals in the same format as the input of the encoder, as f audio signal format evolve from mono to multichannel to 3D audio format, the format of the output signal of the decoder may be selected based on the application scenario. For example, with a 7.1.4 input signal, the decoder outputs a headphone signal for headphone playback, which may be a stereo signal or a binaural signal. The decoder output formats may include: 7.1.4 signals, 5.1.4 signals, binaural signals, stereo signals, mono signals, etc.

The embodiments of the disclosure provide a method for processing an audio code stream signal, an apparatus for processing an audio code stream signal, an electronic device, and a storage medium, to generate a target audio signal and/or an intermediate format signal obtained based on the target audio signal by processing a code stream signal according to a decoding control parameter.

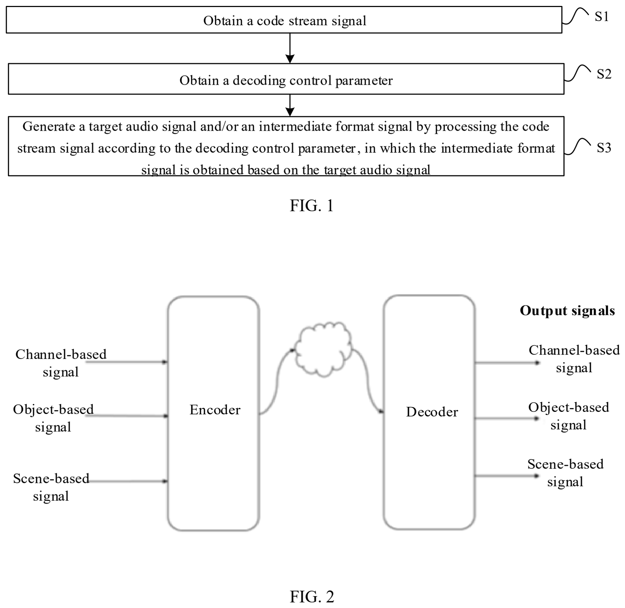

As illustrated in FIG. 1, FIG. 1 is a flowchart of a method for processing an audio code stream signal provided by an embodiment of the disclosure.

As illustrated in FIG. 1, the method includes, but is not limited to the following blocks.

In block S1, a code stream signal is obtained.

In an embodiment of the disclosure, the code stream signal is obtained, i.e., the code stream signal obtained after encoding an initial audio signal.

In an embodiment of the disclosure, the initial audio signal includes at least one of: a channel-based signal; an object-based signal; a scene-based signal; a MASA format signal; a binaural signal; a stereo signal; a mono signal; a mixed format signal; or a temporary format signal.

The mixed format signal include at least two of: a channel-based signal; an object-based signal; a scene-based signal; a MASA format signal; a binaural signal; a stereo signal; a mono signal; or a temporary format signal.

Certainly, the initial audio signal may be other types of signals in addition to the above examples, which are not specifically limited in the embodiments of the disclosure.

In an embodiment of the disclosure, obtaining the code stream signal may be to obtain a code stream signal derived from encoding a channel-based signal.

In an embodiment of the disclosure, obtaining the code stream signal may be to obtain a code stream signal derived from encoding an object-based signal.

In a possible implementation, a decoder obtains a code stream signal. An encoder encodes an initial audio signal to generate a code stream signal, and the decoder receives the code stream signal sent by a transmitter, and thus the decoder obtains the code stream signal.

In another possible implementation, a codec obtains a code stream signal. An encoder in the codec encodes an initial audio signal to generate a code stream signal, and thus the codec obtains the code stream signal.

In block S2, a decoding control parameter is obtained.

In an embodiment of the disclosure, obtaining the decoding control parameter may include obtain parameter indication information input by a user to determine the decoding control parameter.

In a possible implementation, for program execution, a user may input parameter indication information via a command line in the program, and thus the decoding control parameter may be determined based on the information.

In an embodiment of the disclosure, the decoding control parameter may be 0, 1, 2, etc. Different values of the decoding control parameter indicate different signal formats of output audio signals of and/or different types of output signals.

In an embodiment of the disclosure, the decoding control parameter may be 0, 1, 2, etc. In a case that the decoding control parameter includes a certain value, it indicates a signal format of an output signal corresponding to the value. Certainly, the decoding control parameter may also include a plurality of values, which indicates various corresponding signal formats of output signals.

It should be noted that the above examples are for illustration only, and the decoding control parameter may also be or include other types of parameters, for example, A, B, C, etc., which are not specifically limited in the embodiments of the disclosure.

It should be noted that the sequence of execution of blocks S1 and S2 is not fixed; for example, block S2 may be executed first and then block S1.

In block S3, a target audio signal and/or an intermediate format signal are generated by processing the code stream signal according to the decoding control parameter, in which the intermediate format signal is obtained based on the target audio signal.

In an embodiment of the disclosure, in a case that the decoding control parameter and the code stream signal are obtained, one or more manners of processing the code stream signal may be determined based on the decoding control parameter, thereby obtaining signals in one or more specified signal formats as indicated by the decoding control parameter.

In an embodiment of the disclosure, a target audio signal is generated by processing the code stream signal according to the decoding control parameter.

In some embodiments, the code stream signal is obtained based on an initial audio signal, and the target audio signal has the same signal format as the initial audio signal.

In an embodiment of the disclosure, the code stream signal is obtained based on the initial audio signal. That is, the code stream signal is obtained by encoding the initial audio signal. The target audio signal has the same signal format as the initial audio signal.

In an embodiment of the disclosure, the target audio signal may be at least one of: a channel-based signal; an object-based signal; a scene-based signal; a MASA format signal; a binaural signal; a stereo signal; a mono signal; a mixed format signal; or a temporary format signal.

The mixed format signal includes at least two of: a channel-based signal; an object-based signal; a scene-based signal; a MASA format signal; a binaural signal; a stereo signal; a mono signal; or a temporary format signal.

Certainly, the target audio signal may be other types of signals in addition to the above examples, which are not specifically limited in the embodiments of the disclosure.

In an embodiment of the disclosure, as illustrated in FIG. 2, in a case that an initial audio signal is a channel-based signal, a decoder receives a code stream signal sent by an encoder, which is obtained by encoding the channel-based signal. In a case that the decoding control parameter indicates to output a designated signal having the same signal format as the initial audio signal, the decoder can process the code stream signal according to the decoding control parameter to generate a target audio signal having the same signal format as the initial audio signal. The target audio signal is a channel-based signal.

In an embodiment of the disclosure, as illustrated in FIG. 2, in a case that an initial audio signal is an object-based signal, a decoder receives a code stream signal sent by an encoder, which is obtained by encoding the object-based signal. In a case that the decoding control parameter indicates to output a designated signal having the same signal format as the initial audio signal, the decoder can process the code stream signal according to the decoding control parameter to generate a target audio signal having the same signal format as the initial audio signal. The target audio signal is an object-based signal. It should be noted that the above examples are for illustration only, and the signal format of the initial audio signal may be other formats. For example, the initial audio signal in FIG. 2 may also be a scene-based signal, which is not specifically limited in the embodiments of the disclosure.

In an embodiment of the disclosure, the intermediate format signal is generated by processing the code stream signal according to the decoding control parameter, and the intermediate format signal is obtained based on the target audio signal.

It is understood that the target audio signal is generated by processing the code stream signal according to the decoding control parameter. In a case that the decoding control parameter indicates that the target audio signal needs to be further processed to generate the intermediate format signal, the target audio signal is processed to obtain the intermediate format signal.

In an embodiment of the disclosure, the target audio signal and the intermediate format signal are generated by processing the code stream signal according to the decoding control parameter.

It is understood that the target audio signal is generated by processing the code stream signal according to the decoding control parameter. In a case that the decoding control parameter indicates that the target audio signal needs to be further processed to generate the intermediate format signal, the target audio signal is processed to obtain the intermediate format signal. In this way, the target audio signal and the intermediate format signal are generated.

In some embodiments, the target audio signal includes at least one of:

> a channel-based signal;
> an object-based signal;
> a scene-based signal;
> a MASA format signal;
> a binaural signal;
> a stereo signal;
> a mono signal;
> a mixed format signal; or
> a temporary format signal.

In an embodiment of the disclosure, the target audio signal includes at least one of: a channel-based signal; an object-based signal; a scene-based signal; a MASA format signal; a binaural signal; a stereo signal; a mono signal; a mixed format signal; or a temporary format signal.

In some embodiments, the intermediate format signal includes at least one of:

> a rendering signal;
> an initial rendering signal; or
> an intermediate metadata signal.

In an embodiment of the disclosure, the intermediate format signal includes at least one of a rendering signal, an initial rendering signal or an intermediate metadata signal.

In some embodiments, the method for processing the audio code stream signal provided by the embodiment of the disclosure further includes: generating a metadata signal.

In an embodiment of the disclosure, the detailed description of the way of generating the target audio signal by processing the code stream signal according to the decoding control parameter may be found in the relevant description in the above embodiments, which is not repeated here.

In an embodiment of the disclosure, the metadata signal is generated by processing the code stream signal according to the decoding control parameter.

It is understood that in a case the decoding control parameter indicates that the code stream signal needs to be processed to generate the metadata signal, the metadata signal is generated by processing the code stream signal according to the decoding control parameter. The metadata signal includes metadata information of the target audio signal.

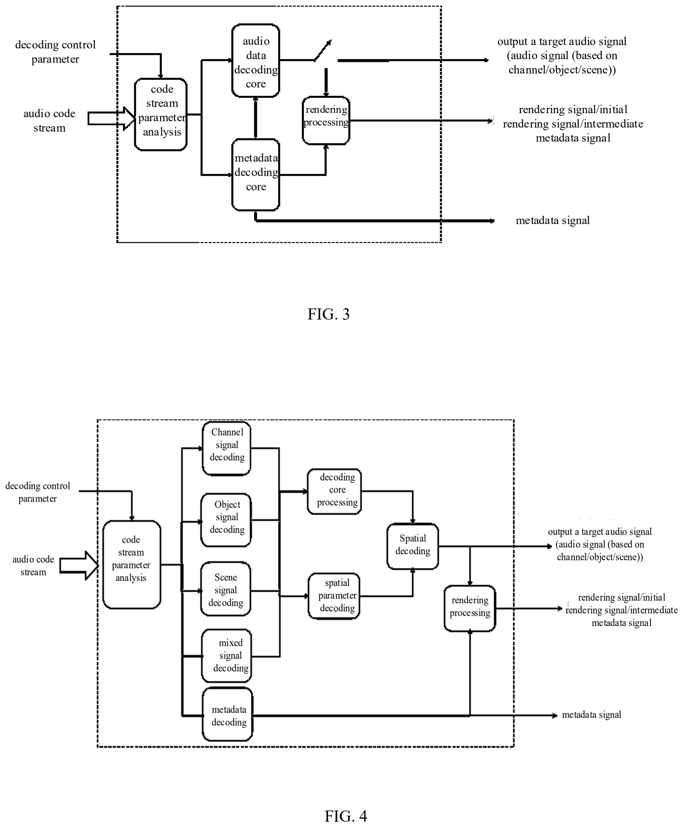

In an embodiment of the disclosure, as illustrated in FIG. 3, after a decoding control parameter and an audio code stream (i.e., a code stream signal) are obtained, code stream parameter analysis is performed on the code stream signal. Audio data obtained after the analysis is sent to an audio data decoding core, and a metadata signal obtained after the analysis is sent to a metadata decoding core. The audio data decoding core outputs an audio signal (i.e., a target audio signal) in the same format as the encoded audio. If the decoding control parameter requires to perform a rendering processing, the output of the audio data decoding core and the output of the metadata decoding core are input into a rendering module for processing, and then the rendering module outputs an initial rendering signal and a required intermediate metadata signal. The metadata decoding core may directly output the metadata signal.

In an embodiment of the disclosure, as illustrated in FIG. 4, after a decoding control parameter and an audio code stream (i.e., a code stream signal) are obtained, a decoding processing of a decoder includes: inputting the audio code stream (i.e., the code stream signal) into the decoder, so that the decoder obtains an audio data signal (i.e., a target audio signal) and a metadata signal through code stream parameter analysis, in which the audio data signal may be a channel-based signal, an object-based signal, a scene-based signal, or a mixed format signal;

> inputting audio data of a channel-based signal into a channel signal decoding module; or
> inputting audio data of an object-based signal into an object signal decoding module; or
> inputting audio data of a scene-based signal into a scene signal decoding module; or
> inputting audio data of a mixed format signal into a mixed format signal decoding module, in which the mixed format signal is a mixture of the above three formats, and may also include a MASA format signal, a binaural signal, etc.;
> inputting output signals from the above processes into a decoding core processing module and a spatial parameter decoding module, respectively, and inputting output signals of the two modules to a spatial decoding processing module to obtain an output audio signal (i.e., a target audio signal), which may be a channel-based signal, an object-based signal, a scene-based signal, or a mixed format signal;
> based on the decoding control parameter, in a case that a rendering signal is required, obtaining an initial rendering signal and an intermediate metadata signal by inputting a spatial decoding signal (i.e., a target audio signal) and a metadata decoding signal (i.e., a metadata signal) into a rendering module, in which the initial rendering signal is obtained by performing a primary rendering processing on the audio data signal. For example, a head-related transfer function (HRTF) may be selected based on initial position of an object signal. Assuming that the object signal is x(n), an azimuth angle of the marked initial position is 60° and an elevation angle of the marked initial position is 20°, then HRTF(60,20) is selected for a convolution processing with the object signal, and the obtained initial rendering signal Y(n) is obtained via the following equation:

$$Y(n) = x(n) \otimes HRTF(60,20);$$

and
outputting the initial position (60°,20°) of the object signal, simultaneously.

The decode of an embodiment of the disclosure can output the temporary format audio signal (i.e., the initial rendering signal) and the intermediate metadata signal, and the temporary format audio signal is an audio signal that is partially rendered. The final rendering signal may be obtained according to the audio signal that is partially rendered and the intermediate metadata signal in subsequent processes. The rendering signal is input into a playback device to provide audio experience services for users.

In some embodiments, the method for processing the audio code stream signal provided by the embodiments of the disclosure further includes: generating a rendering signal according to the initial rendering signal and the intermediate metadata signal, in which the intermediate format signal includes the initial rendering signal and the intermediate metadata signal.

In an embodiment of the disclosure, in a case that the intermediate format signal includes the initial rendering signal and the intermediate metadata signal, a rendering signal is generated according to the initial rendering signal and the intermediate metadata signal.

In some embodiments, the method for processing the audio code stream signal provided by the embodiments of the disclosure further includes: generating a rendering signal according to the target audio signal and the metadata signal.

In an embodiment of the disclosure, in a case that the target audio signal and the metadata signal are obtained, a rendering signal is generated according to the target audio signal and the metadata signal.

In some embodiments, the metadata signal includes at least one of:

an orientation;
a distance;
spatial information of a MASA format signal; or
a temporary metadata signal.

In an embodiment of the disclosure, the metadata signal includes at least one of: an orientation; a distance; spatial information of a MASA format signal; or a temporary metadata signal.

In some embodiments, the rendering signal includes at least one of:

a headphone signal; or
a speaker signal.

In an embodiment of the disclosure, the rendering signal may be the headphone signal and/or the speaker signal.

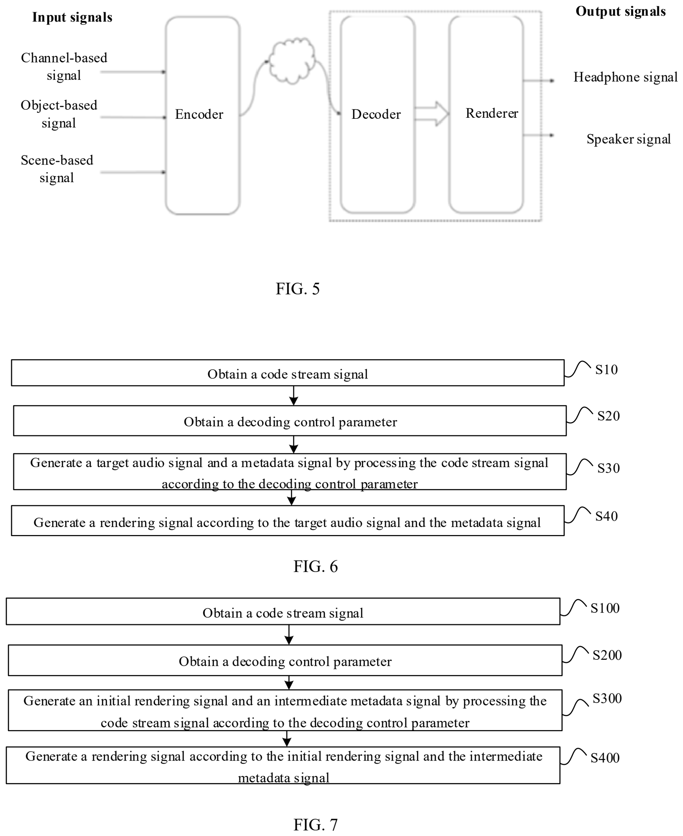

In an embodiment of the disclosure, as illustrated in FIG. 5, a decoder and a renderer obtain a decoding control parameter and a code stream signal. The code stream signal is obtained by an encoder through encoding an initial audio signal, and the initial audio signal may be, for example, a channel-based signal, an object-based signal or a scene-based signal. The decoder and the renderer may generate a rendering signal by processing the code stream signal according to the decoding control parameter, in which the rendering signal may be a headphone signal and/or a speaker signal.

By implementing the embodiments of the disclosure, the code stream signal and the decoding control parameter are obtained, and the target audio signal and/or the intermediate format signal may be generated by processing the code stream signal according to the decoding control parameter, in which the intermediate format signal is obtained based on the target audio signal. Thus, the target audio signal and/or the intermediate format signal obtained based on the target audio signal may be obtained by processing the code stream signal according to the decoding control parameter. Moreover, a rendering signal may be determined based on the target audio signal and/or the intermediate format signal. Therefore, users can flexibly select a format of an output signal of a decoder by setting the decoding control parameter, and design a solution for an audio service based on the output signal, so as to obtain an optimal audio experience service.

As illustrated in FIG. 6, FIG. 6 is a flowchart of another method for processing an audio stream signal provided by an embodiment of the disclosure.

As illustrated in FIG. 6, the method includes, but is not limited to, the following blocks.

In block S10, a code stream signal is obtained.

In block S20, a decoding control parameter is obtained.

The relevant descriptions of blocks S10 and S20 can refer to the descriptions in the above embodiments, which will not be repeated here.

It should be noted that the sequence of execution of blocks S10 and S20 is not fixed, for example, block S20 may be executed first and then block S10.

In block S30, a target audio signal and a metadata signal are generated by processing the code stream signal according to the decoding control parameter.

In an embodiment of the disclosure, the detailed description of the process of generating the target audio signal through processing the code stream signal according to the decoding control parameter may be found in the relevant descriptions in the above embodiments, which will not be repeated here.

In an embodiment of the disclosure, the metadata signal is also generated by processing the code stream signal according to the decoding control parameter. The metadata signal includes metadata information of the target audio signal.

It is understood that in a case the decoding control parameter indicates that the code stream signal needs to be processed to generate the metadata signal, the metadata signal is generated by processing the code stream signal according to the decoding control parameter.

In an embodiment of the disclosure, as illustrated in FIG. 3, after the decoding control parameter and the audio code stream (i.e., the code stream signal) are obtained, the code stream parameter analysis is performed on the code stream signal. The audio data obtained after the analysis is sent to the audio data decoding core, and the metadata signal obtained after the analysis is sent to the metadata decoding core. The audio data decoding core outputs an audio signal (i.e., the target audio signal) in the same format as the encoded audio. The metadata decoding core can directly output the metadata signal.

In an embodiment of the disclosure, as illustrated in FIG. 4, after the decoding control parameter and the audio code stream (i.e., the code stream signal) are obtained, the decoding processing of the decoder includes: inputting the audio code stream (i.e., the code stream signal) to the decoder, so that the decoder obtains the audio data signal (i.e., the target audio signal) and the metadata signal through the code stream parameter analysis, in which the audio data signal may be a channel-based signal, an object-based signal, a scene-based signal, or a mixed format signal;

 inputting the audio data of the channel-based signal into the channel signal decoding module; or inputting the audio data of the object-based signal into the object signal decoding module; or inputting the audio data of the scene-based signal into the scene signal decoding module; or inputting the audio data of the mixed format signal into the mixed format signal decoding module, in which the mixed format signal is a mixture of the other three formats, and may also include a MASA format signal, a binaural signal, etc.; inputting the output signals from the above processes into the decoding core processing module and the spatial parameter decoding module, respectively, and inputting the output signals of the two modules to the spatial decoding processing module to obtain the output audio signal (i.e., the target audio signal), which may be a channel-based signal, an object-based signal, a scene-based signal, or a mixed format signal;

based on the decoding control parameter, in a case that the rendering signal is required, obtaining the initial rendering signal and the intermediate metadata signal by inputting the spatial decoding signal (i.e., the target audio signal) and the metadata decoding signal (i.e., the metadata signal) into the rendering module, in which the initial rendering signal is obtained by performing the primary rendering processing on the audio data signal. For example, the HRTF may be selected based on the initial position of the object signal. Assuming that the object signal is x(n), the azimuth angle of the marked initial position is 60° and the elevation angle is 20°, then HRTF(60,20) is selected for the convolution processing with the object signal, and the obtained initial rendering signal Y(n) is obtained via the following equation:

$$Y(n) = x(n) \otimes HRTF(60,20);$$

and
outputting the initial position (60°,20°) of the object signal, simultaneously.

An embodiment of the disclosure is based on the design requirements of 3GPP IVAS. The encoder supports an input format audio signal of IVAS, and the decoder can decode an output format audio signal of IVAS and can also output the temporary format audio signal (the initial rendering signal) and the intermediate metadata signal. The temporary format audio signal is an audio signal that is partially rendered. The final rendering signal may be obtained according to the audio signal that is partially rendered (the initial rendering signal) and the intermediate metadata signal in subsequent processes. The rendering signal is input into a playback device to provide audio experience services for users.

In block S40, a rendering signal is generated according to the target audio signal and the metadata signal.

In an embodiment of the disclosure, in a case that the target audio signal and the metadata signal are obtained, the rendering signal is generated according to the target audio signal and the metadata signal.

In some embodiments, the metadata signal includes at least one of:

 an orientation;
a distance;
spatial information of a MASA format signal; or
a temporary metadata signal.

In an embodiment of the disclosure, the metadata signal includes at least one of: an orientation; a distance; spatial information of a MASA format signal; or a temporary metadata signal.

In some embodiments, the rendering signal includes at least one of:

a headphone signal; or
a speaker signal.

In an embodiment of the disclosure, the rendering signal may be the headphone signal and/or the speaker signal.

By implementing the embodiments of the disclosure, the code stream signal and the decoding control parameter are obtained, the target audio signal and the metadata signal are generated by processing the code stream signal according to the decoding control parameter, and the rendering signal is generated based on the target audio signal and the metadata signal. Thus, the target audio signal and the metadata signal are generated by processing the code stream signal according to the decoding control parameter, and the rendering signal is determined based on the target audio signal and the metadata signal. Therefore, users can flexibly select a format of an output signal of a decoder by setting the decoding control parameter, and design a solution for an audio service based on the output signal, so as to obtain an optimal audio experience service.

As illustrated in FIG. 7, FIG. 7 is a flowchart of another method for processing an audio stream signal provided by an embodiment of the disclosure.

As illustrated in FIG. 7, the method includes, but is not limited to, the following blocks.

In block S100, a code stream signal is obtained.

In block S200, a decoding control parameter is obtained.

The relevant descriptions of blocks S100 and S200 can refer to the descriptions in the above embodiments, which will not be repeated here.

It should be noted that the sequence of execution of blocks S100 and S200 is not fixed, for example, block S200 may be executed first and then block S100.

In block S300, an initial rendering signal and an intermediate metadata signal are generated by processing the code stream signal according to the decoding control parameter.

In block S400, a rendering signal is generated according to the initial rendering signal and the intermediate metadata signal.

In an embodiment of the disclosure, in a case that the initial rendering signal and the intermediate metadata signal are obtained, the rendering signal is generated according to the initial rendering signal and the intermediate metadata signal.

In an embodiment of the disclosure, as illustrated in FIG. 3, after the decoding control parameter and the audio code stream (i.e., the code stream signal) are obtained, the code stream parameter analysis is performed on the code stream signal. The audio data obtained after the analysis is sent to the audio data decoding core, and the metadata signal obtained after the analysis is sent to the metadata decoding core. The audio data decoding core outputs the audio signal (i.e., the target audio signal) in the same format as the encoded audio. If the decoding control parameter requires to perform a rendering processing, the outputs of the audio data decoding core and the metadata decoding core are input into the rendering module for processing, and then the rendering module outputs the initial rendering signal and the required intermediate metadata signal.

An embodiment of the disclosure is based on the design requirements of 3GPP IVAS. The encoder supports the input format audio signal of IVAS, and the decoder can decode the output format audio signal of IVAS and can also output the temporary format audio signal (the initial rendering signal) and the intermediate metadata signal. The temporary format audio signal is an audio signal that is partially rendered. The final rendering signal may be obtained according to the audio signal that is partially rendered (the initial rendering signal) and the intermediate metadata signal in subsequent processes. The rendering signal is input into a playback device to provide audio experience services for users.

In some embodiments, the rendering signal includes at least one of:

a headphone signal; or
a speaker signal.

In an embodiment of the disclosure, the rendering signal may be the headphone signal and/or the speaker signal.

By implementing the embodiments of the disclosure, the code stream signal and the decoding control parameter are obtained, the initial rendering signal and the intermediate metadata signal are generated by processing the code stream signal according to the decoding control parameter, and the rendering signal is generated based on the initial rendering signal and the intermediate metadata signal. Thus, the initial rendering signal and the intermediate metadata signal are generated by processing the code stream signal according to the decoding control parameter, and the rendering signal is determined based on the initial rendering signal and the intermediate metadata signal. Therefore, users can flexibly select a format of an output signal of a decoder by setting the decoding control parameter, and design a solution for an audio service based on the output signal, so as to obtain an optimal audio experience service.

To facilitate understanding, an embodiment of the disclosure provides an example embodiment.

In the example embodiment, a decoder receives a code stream signal to be decoded, performs code stream parameter analysis on the code stream signal according to a decoding control parameters, and inputs audio data output after the code stream parameter analysis to an audio data decoding core for processing and inputs a metadata signal output after the code stream parameter analysis into a metadata decoding core for processing. Then, it inputs outputs of the audio data decoding core and the metadata decoding core to a rendering module to obtain a rendering signal and auxiliary metadata based on the decoding control parameter. The metadata decoding core may directly use metadata as an output signal of the decoder.

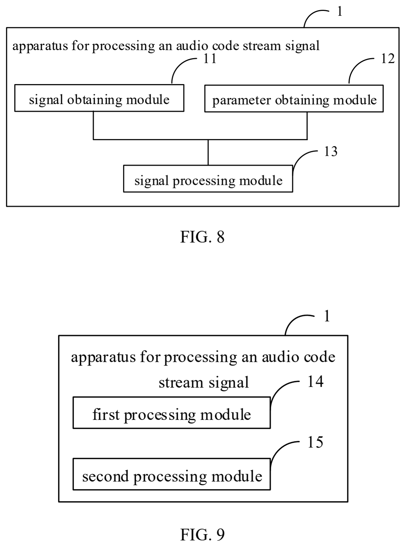

FIG. 8 is a structural diagram of an apparatus 1 for processing an audio code stream signal provided by an embodiment of the disclosure.

As illustrated in FIG. 8, the apparatus 1 for processing the audio code stream signal includes: a signal obtaining module 11, a parameter obtaining module 12 and a signal processing module 13.

The signal obtaining module 11 is configured to obtain a code stream signal.

The parameter obtaining module 12 is configured to obtain a decoding control parameter.

The signal processing module 13 is configured to generate a target audio signal and/or an intermediate format signal by processing the code stream signal according to the decoding control parameter, in which the intermediate format signal is obtained based on the target audio signal.

By implementing the embodiments of the disclosure, the signal obtaining module 11 is configured to obtain the code stream signal, the parameter obtaining module 12 is configured to obtain the decoding control parameter, and the signal processing module 13 is configured to generate the target audio signal and/or the intermediate format signal by processing the code stream signal according to the decoding control parameter, in which the intermediate format signal is obtained based on the target audio signal. In conclusion, the target audio signal and/or the intermediate format signal obtained based on the target audio signal may be obtained by processing the code stream signal according to the decoding control parameter. Moreover, a rendering signal may be determined based on the target audio signal and/or the intermediate format signal. Therefore, users can flexibly select a format of an output signal of a decoder by setting the decoding control parameter, and design a solution for an audio service based on the output signal, so as to obtain an optimal audio experience service.

In some embodiments, the intermediate format signal includes at least one of:

a rendering signal;
an initial rendering signal; or
an intermediate metadata signal.

As illustrated in FIG. 9, the apparatus 1 for processing the audio code stream signal also includes: a first processing module 14.

The first processing module 14 is configured to generate a rendering signal according to the initial rendering signal and the intermediate metadata signal, in which the intermediate format signal includes the initial rendering signal and the intermediate metadata signal.

In some embodiments, the rendering signal includes at least one of:

a headphone signal; or
a speaker signal.

In some embodiments, the signal processing module 13 is further configured to: generate a metadata signal.

In FIG. 9, in some embodiments, the apparatus 1 for processing the audio code stream signal also includes: a second processing module 15.

The second processing module 15 is configured to generate the rendering signal according to the target audio signal and the metadata signal.

In some embodiments, the metadata signal includes at least one of:

an orientation;
a distance;
spatial information of a MASA format signal; or
a temporary metadata signal.

In some embodiments, the code stream signal is obtained based on an initial audio signal, and the target audio signal has the same signal format as the initial audio signal.

In some embodiments, the target audio signal includes at least one of:

a channel-based signal;
an object-based signal;
a scene-based signal;
a MASA format signal;
a binaural signal;
a stereo signal;
a mono signal;
a mixed format signal; or
a temporary format signal.

Regarding the apparatus in the above embodiment, the specific manner in which each module performs operations has been described in detail in the method embodiments, which will not be repeated here.

The apparatus for processing the audio code stream signal provided in the embodiments of the disclosure can implement the method for processing the audio code stream signal described in some of the above embodiments, and its beneficial effects are the same as those of the above method for processing the audio code stream signal, which will not be repeated here.

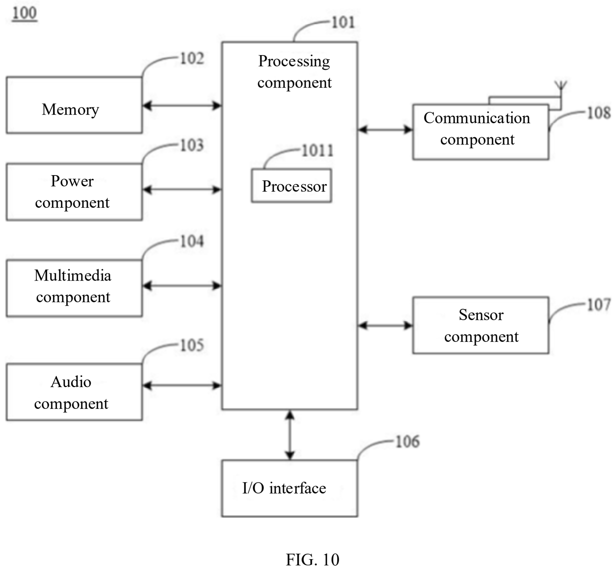

FIG. 10 is a structural diagram of an electronic device 100 for implementing the method for processing the audio code stream signal illustrated according to an example embodiment.

For example, the electronic device 100 may be a mobile phone, a computer, a digital broadcasting terminal, a message transceiver device, a game console, a tablet device, a medical device, a fitness device, and a personal digital assistant, etc.

As illustrated in FIG. 10, the electronic device 1600 may include one or more of the following components: a processing component 101, a memory 102, a power component 103, a multimedia component 104, an audio component 105, an input/output (I/O) interface 106, a sensor component 107, and a communication component 108.

The processing component 101 typically controls overall operations of the electronic device 100, such as operations associated with display, telephone calls, data communications, camera operations and recording operations. The processing component 101 includes one or more processors 1011 to execute instructions to implement all or part of the steps in the above method. Moreover, the processing component 101 includes one or more modules which facilitate the interaction between the processing component 101 and other components. For example, the processing component 101 includes a multimedia module to facilitate the interaction between the multimedia component 104 and the processing component 101.

The memory 102 is configured to store various types of data to support the operation of the electronic device 100. Examples of such data include instructions for any applications or methods operated on the electronic device 100, contact data, phonebook data, messages, pictures, videos, etc. The memory 102 may be implemented using any type of volatile or non-volatile memory devices, or a combination thereof, such as a static random-access memory (SRAM), an electrically-erasable programmable read only memory (EEPROM), an erasable programmable read only memory (EPROM), a programmable read only memory (PROM), a read only memory (ROM), a magnetic memory, a flash memory, a magnetic disk or an optical disk.

The power component 103 provides power to various components of the electronic device 100. The power component 103 may include a power management system, one or more power sources, and any other components associated with generation, management, and distribution of power in the electronic device 100.

The multimedia component 104 includes a screen providing an output interface between the electronic device 100 and the user. In some embodiments, the screen may include a liquid crystal display (LCD) and a touch panel (TP). The TP includes one or more touch sensors to sense touches, swipes, and gestures on the TP. The touch sensor can not only sense a boundary of a touch or swipe action, but also sense a period of wakeup time and a pressure associated with the touch or swipe action. In some embodiments, the multimedia component 104 includes a front-facing camera and/or a rear-facing camera. When the electronic device 100 is in an operating mode, such as a shooting mode or a video mode, the front-facing camera and/or the rear-facing camera can receive external multimedia data. Each front-facing camera and rear-facing camera may be a fixed optical lens system or have focal length and optical zoom capability.

The audio component 105 is configured to output and/or input audio signals. For example, the audio component 105 includes a microphone (MIC) configured to receive an external audio signal when the electronic device 100 is in an operation mode, such as a call mode, a recording mode, and a voice recognition mode. The received audio signal may be further stored in the memory 102 or transmitted via the communication component 108. In some embodiments, the audio component 105 further includes a speaker to output audio signals.

The I/O interface 106 provides an interface between the processing component 101 and peripheral interface modules, such as a keyboard, a click wheel, buttons, and the like. The buttons include, but are not limited to, a home button, a volume button, a starting button, and a locking button.

The sensor component 107 includes one or more sensors to provide status assessments of various aspects of the electronic device 100. For example, the sensor component 107 may detect an open/closed status of the electronic device 100, relative positioning of components, e.g., the display and the keypad, of the electronic device 100, a change in position of the electronic device 100 or a component of the electronic device 100, a presence or absence of user contact with the electronic device 100, an orientation or an acceleration/deceleration of the electronic device 100, and a change in temperature of the electronic device 100. The sensor component 107 includes a proximity sensor configured to detect the presence of nearby objects without any physical contact. The sensor component 107 may also include a light sensor, such as a complementary metal oxide semiconductor (CMOS) or charge-coupled device (CCD) image sensor, for use in imaging applications. In some embodiments, the sensor component 107 may also include an accelerometer sensor, a gyroscope sensor, a magnetic sensor, a pressure sensor, or a temperature sensor.

The communication component 108 is configured to facilitate communication, wired or wirelessly, between the electronic device 100 and other devices. The electronic device 100 can access a wireless network based on a communication standard, such as Wi-Fi, 2G or 3G, or a combination thereof. In an example embodiment, the communication component 108 receives a broadcast signal or broadcast-associated information from an external broadcast management system via a broadcast channel. In an example embodiment, the communication component 108 also includes a near field communication (NFC) module to facilitate short-range communication. For example, the NFC module may be implemented based on a radio frequency identification (RFID) technology, an infrared data association (IrDA) technology, an ultra-wide band (UWB) technology, a blue tooth (BT) technology, and other technologies.

In an example embodiment, the electronic device 100 may be implemented with one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, for performing the above method for processing the audio code stream signal. It should be noted that the implementation process and technical principles of the electronic device of the embodiments can refer to the above explanation of the method for processing the audio code stream signal of the embodiments of the disclosure, which will not be repeated here.

The electronic device 100 provided in the embodiments of the disclosure can execute the method for processing the audio code stream signal as described in some of the above embodiments, and its beneficial effects are the same as those of the method for processing the audio code stream signal described above, which will not be repeated here.

In order to implement the above embodiments, the disclosure also proposes a storage medium.

When instructions stored in the storage medium are executed by the processor of the electronic device, the electronic device is caused to implement the method for processing the audio code stream signal as described above. For example, the storage medium may be a ROM, a random access memory (RAM), a Compact Disc-ROM (CD-ROM), a magnetic tape, a floppy disk, an optical data storage device, and the like.

In order to implement the above embodiments, the disclosure further provides a computer program product. When the computer program is executed by the processor of the electronic device, the electronic device can implement the method for processing the audio code stream signal as described above.

Other embodiments of the disclosure will be apparent to those skilled in the art from consideration of the specification and practice of the disclosure disclosed here. The application is intended to cover any variations, uses, or adaptations of the disclosure following the general principles thereof and including such departures from the disclosure as come within known or customary practice in the art. It is intended that the specification and embodiments be considered as illustrative only, with a true scope and spirit of the disclosure being indicated by the attached claims.

Those skilled in the art will clearly understand that, for the convenience and brevity of description, the specific working processes of the systems, apparatus and modules described above can refer to the corresponding processes in the above method embodiments, which will not be repeated here.

The above are only specific implementations of the disclosure, but the scope of protection of the disclosure is not limited thereto. Those skilled in the art familiar to this technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A method for processing an audio code stream signal, comprising:

    obtaining a code stream signal;
    obtaining a decoding control parameter; and
    generating a target audio signal and/or an intermediate format signal by processing the code stream signal according to the decoding control parameter, wherein the intermediate format signal is obtained based on the target audio signal.

2. The method of claim 1, wherein the intermediate format signal comprises at least one of:

    a rendering signal;
    an initial rendering signal; or
    an intermediate metadata signal.

3. The method of claim 2, further comprising:
   generating a rendering signal according to the initial rendering signal and the intermediate metadata signal, wherein the intermediate format signal comprises the initial rendering signal and the intermediate metadata signal.

4. The method of claim 2 or 3, wherein a rendering signal comprises at least one of:

    a headphone signal; or
    a speaker signal.

5. The method of any one of claims 1-4, further comprising:
   generating a metadata signal.

6. The method of claim 5, further comprising:
   generating a rendering signal according to the target audio signal and the metadata signal.

7. The method of claim 5 or 6, wherein the metadata signal comprises at least one of:

    an orientation;
    a distance;
    spatial information of a metadata-assisted spatial audio (MASA) format signal; or

a temporary metadata signal.

8. The method of any one of claims 1-7, wherein the code stream signal is obtained based on an initial audio signal, and the target audio signal has the same signal format as the initial audio signal.

9. The method of any one of claims 1-8, wherein the target audio signal comprises at least one of:

   a channel-based signal;
   an object-based signal;
   a scene-based signal;
   a MASA format signal;
   a binaural signal;
   a stereo signal;
   a mono signal;
   a mixed-format signal; or
   a temporary format signal.

10. An apparatus for processing an audio code stream signal, comprising:

    a signal obtaining module, configured to obtain a code stream signal;
    a parameter obtaining module, configured to obtain a decoding control parameter; and
    a signal processing module, configured to generate a target audio signal and/or an intermediate format signal by processing the code stream signal according to the decoding control parameter, wherein the intermediate format signal is obtained based on the target audio signal.

11. The apparatus of claim 10, wherein the intermediate format signal comprises at least one of:

    a rendering signal;
    an initial rendering signal; or
    an intermediate metadata signal.

12. The apparatus of claim 11, further comprising:
    a first processing module, configured to generate a rendering signal according to the initial rendering signal and the intermediate metadata signal, wherein the intermediate format signal comprises the initial rendering signal and the intermediate metadata signal.

13. The apparatus of claim 11 or 12, wherein a rendering signal comprises at least one of:

    a headphone signal; or
    a speaker signal.

14. The apparatus of any one of claims 10-13, wherein the signal processing module is further configured to:

generate a metadata signal.

15. The apparatus of claim 14, further comprising:
    a second processing module, configured to generate a rendering signal according to the target audio signal and the metadata signal.

16. An electronic device, comprising:

    at least one processor; and
    a memory communicatively connected to the at least one processor;
    wherein the memory stores instructions executable by the at least one processor, and the instructions are executed by the at least one processor to enable the at least one processor to implement the method of any one of claims 1-9.

17. A non-transitory computer-readable storage medium for storing computer instructions, wherein the computer instructions are used to cause a computer to implement the method of any one of claims 1-9.

18. A computer program product comprising computer instructions, wherein when the computer instructions are executed by a processor, the method of any one of claims 1-9 is implemented.

| Obtain a code stream signal | S1 |
|---|---|

| Obtain a decoding control parameter | S2 |
|---|---|

| Generate a target audio signal and/or an intermediate format signal by processing the code stream signal according to the decoding control parameter, in which the intermediate format signal is obtained based on the target audio signal | S3 |
|---|---|

FIG. 1

**Output signals**

Channel-based signal

Object-based signal

Scene-based signal

Encoder

Decoder

Channel-based signal

Object-based signal

Scene-based signal

FIG. 2

FIG. 3

FIG. 4

**Input signals**

Channel-based
signal

Object-based
signal

Scene-based
signal

Encoder

Decoder → Renderer

**Output signals**

Headphone signal

Speaker signal

FIG. 5

| | |
|---|---|
| Obtain a code stream signal | S10 |
| Obtain a decoding control parameter | S20 |
| Generate a target audio signal and a metadata signal by processing the code stream signal according to the decoding control parameter | S30 |
| Generate a rendering signal according to the target audio signal and the metadata signal | S40 |

FIG. 6

| | |
|---|---|
| Obtain a code stream signal | S100 |
| Obtain a decoding control parameter | S200 |
| Generate an initial rendering signal and an intermediate metadata signal by processing the code stream signal according to the decoding control parameter | S300 |
| Generate a rendering signal according to the initial rendering signal and the intermediate metadata signal | S400 |

FIG. 7

1

apparatus for processing an audio code stream signal

11

signal obtaining module

12

parameter obtaining module

13

signal processing module

FIG. 8

1

apparatus for processing an audio code stream signal

14

first processing module

15

second processing module

FIG. 9

FIG. 10

## INTERNATIONAL SEARCH REPORT

| International application No. |
|---|
| **PCT/CN2023/087699** |

**A.    CLASSIFICATION OF SUBJECT MATTER**

G10L19/22(2013.01)i

According to International Patent Classification (IPC) or to both national classification and IPC

**B.    FIELDS SEARCHED**

Minimum documentation searched (classification system followed by classification symbols)

IPC：G10L19

Documentation searched other than minimum documentation to the extent that such documents are included in the fields searched

Electronic data base consulted during the international search (name of data base and, where practicable, search terms used)

CNTXT, WPABSC, ENTXTC, WPABS: 语音, 音频, 编码, 解码, 码流, 格式, 渲染, 元数据, speech, voice, audio, cod+, decod +, format?, romanc+

**C.    DOCUMENTS CONSIDERED TO BE RELEVANT**

| Category* | Citation of document, with indication, where appropriate, of the relevant passages | Relevant to claim No. |
|---|---|---|
| X | CN 114067810 A (HUAWEI TECHNOLOGIES CO., LTD.) 18 February 2022 (2022-02-18) description, paragraphs 78-134, 169-184 and 249-259 | 1-18 |
| X | US 2021168550 A1 (DOLBY INTERNATIONAL AB) 03 June 2021 (2021-06-03) description, paragraphs 179-198 | 1-18 |
| A | CN 109448741 A (DIGITAL RISE TECHNOLOGY CO., LTD.) 08 March 2019 (2019-03-08) entire document | 1-18 |
| A | WO 2020152394 A1 (NOKIA TECHNOLOGIES OY) 30 July 2020 (2020-07-30) entire document | 1-18 |
| A | US 2021012782 A1 (ORANGE) 14 January 2021 (2021-01-14) entire document | 1-18 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 January 2024** | **09 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/087699**

| Patent document cited in search report | | | Publication date (day/month/year) | Patent family member(s) | | | Publication date (day/month/year) |
|---|---|---|---|---|---|---|---|
| CN | 114067810 | A | 18 February 2022 | None | | | |
| US | 2021168550 | A1 | 03 June 2021 | WO | 2019197404 | A1 | 17 October 2019 |
| | | | | US | 2023065644 | A1 | 02 March 2023 |
| | | | | RU | 2020127372 | A | 17 February 2022 |
| | | | | US | 11432099 | B2 | 30 August 2022 |
| | | | | EP | 4123644 | A1 | 25 January 2023 |
| | | | | KR | 20200141438 | A | 18 December 2020 |
| | | | | EP | 3776543 | A1 | 17 February 2021 |
| | | | | EP | 3776543 | B1 | 31 August 2022 |
| | | | | JP | 2022120190 | A | 17 August 2022 |
| | | | | BR | 112020015835 | A2 | 15 December 2020 |
| | | | | JP | 2021517987 | A | 29 July 2021 |
| | | | | JP | 7093841 | B2 | 30 June 2022 |
| CN | 109448741 | A | 08 March 2019 | None | | | |
| WO | 2020152394 | A1 | 30 July 2020 | GB | 201900871 | D0 | 13 March 2019 |
| | | | | GB | 2580899 | A | 05 August 2020 |
| US | 2021012782 | A1 | 14 January 2021 | FR | 3075443 | A1 | 21 June 2019 |
| | | | | JP | 2023099599 | A | 13 July 2023 |
| | | | | EP | 3729832 | A1 | 28 October 2020 |
| | | | | JP | 2021508195 | A | 25 February 2021 |
| | | | | JP | 7279049 | B2 | 22 May 2023 |
| | | | | EP | 4135350 | A1 | 15 February 2023 |
| | | | | BR | 112020012071 | A2 | 24 November 2020 |
| | | | | RU | 2020121890 | A | 04 January 2022 |
| | | | | US | 11176951 | B2 | 16 November 2021 |
| | | | | WO | 2019122580 | A1 | 27 June 2019 |
| | | | | KR | 20200100664 | A | 26 August 2020 |
| | | | | KR | 102555789 | B1 | 13 July 2023 |

Form PCT/ISA/210 (patent family annex) (July 2022)